# EUROPÄISCHE PATENTSCHRIFT

(11) **EP 2 698 336 B1**
(45) Veröffentlichungstag und Bekanntmachung des Hinweises auf die Patenterteilung: **02.07.2014**
(21) Anmeldenummer: 13177806.0
(22) Anmeldetag: 24.07.2013
(51) Int. Cl.: B66C 1/66, F16G 15/08, F16B 45/00, F16B 35/04

(54) **Anschlagöse**
Anchorage point
Anneau d'arrimage

(30) Priorität: 15.08.2012 DE 202012103079 U
(43) Veröffentlichungstag der Anmeldung: 19.02.2014
(73) Patentinhaber: J.D. Theile GmbH & Co. KG, D-58239 Schwerte (DE)
(72) Erfinder: Benecke, Rainer, 44229 Dortmund (DE)
(74) Vertreter: Haverkamp, Jens

(56) Entgegenhaltungen:
- EP-A2- 0 161 652
- WO-A1-01/51401
- DE-A1- 4 403 785
- US-A- 2 812 971

## Beschreibung

Die Erfindung betrifft eine Anschlagöse mit einer Anschlussschraube zum Festlegen der Anschlagöse an einem Gegenstand, welche Anschlussschraube über einen Schaft mit einem Gewindeabschnitt und einen an den Schaft angeformten Kopf verfügt, mit einem um die Längsachse des Schaftes der Anschlussschraube drehbaren Ösenteil sowie mit Mitteln zum bedarfsweisen Übertragen einer Drehbewegung des Ösenteils auf die Anschlussschraube.

Derartige Anschlagösen werden typischerweise zum Heben von Gegenständen verwendet. Angeschlossen werden die Anschlagösen mit ihrer Anschlussschraube an den zu hebenden Gegenstand, wobei zum Heben eines Gegenstandes typischerweise mehrere Anschlagösen zum Einhängen eines entsprechenden Hebegeschirrs verwendet werden. Damit sich bei Anliegen einer durch ein in das Ösenteil eingehängtes Hebezeug das Ösenteil entsprechend der darauf wirkenden Zugrichtung ausrichtet, ist das Ösenteil gegenüber der Anschlussschraube drehbar. Dieselben Eigenschaften einer Anschlagöse sind auch gewünscht, wenn diese zum Verzurren eines Gegenstandes eingesetzt wird.

Anschlagösen verbleiben typischerweise an dem zu hebenden oder zu verzurrenden Gegenstand nur für die Dauer des Hebens bzw. Festlegens. Daher wird eine solche Anschlagöse mittels einer mit einem Gewindeabschnitt versehenen Anschlussschraube in eine zu diesem Zweck vorgesehene und mit einem komplementären Innengewinde ausgestattete Gewindebohrung des Gegenstandes eingeschraubt. Wird die Anschlussöse nicht mehr benötigt, wird diese aus dem Gegenstand wieder herausgeschraubt. Somit gehört ein oftmaliges Ein- und Ausschrauben einer solchen Anschlagöse zu den typischen mit einer solchen Anschlagöse zu ihrer Verwendung benötigten Handhabungen. Um diesen Vorgang zu vereinfachen ist in DE 44 03 785 A1 vorgeschlagen worden, an das Ösenteil einen mit dem Kopf der Anschlussschraube kuppelbares Schraubwerkzeug anzuschließen, über das durch das Ösenteil eine Schraubbewegung in die Anschlussschraube einleitbar ist. Dabei ist vorgesehen, dass die Anschlussschraube beispielsweise als Innensechskantschraube ausgebildet ist und das Schraubwerkzeug ein komplementäres Werkzeug umfasst. Das Schraubwerkzeug selbst umfasst zum Anschließen desselben an das Ösenteil und zum Einleiten eines Drehmomentes einen um den Bogen des Ösenteils herumgeführten Bügel. Ist das Sechskantwerkzeug des Schraubwerkzeuges in die Innensechskantausnehmung der Anschlussschraube eingesetzt, ist die Anschlussschraube nach Überwinden des notwendigerweise vorhandenen Spiels zwischen dem Bogen des Ösenteils und dem Bügel drehmomentschlüssig an das Ösenteil angeschlossen. Mithin kann durch eine Drehbewegung des Ösenteils ohne zusätzliches Werkzeug die Anschlussschraube betätigt werden. Um das Schraubwerkzeug an das Ösenteil anzuschließen, verfügt der das Ösenteil einfassende Bügel des Schraubwerkzeuges über eine aufweitbare Öffnung, durch die der Bügel des Ösenteils zum Anschließen des Schraubwerkzeuges an das Ösenteil hindurch geführt wird. Damit eine Drehmomentübertragung von dem Ösenteil auf die Anschlussschraube nicht nur zum losen Ein- oder Ausschrauben der Anschlussschraube in eine entsprechende Gewindebohrung eines Gegenstandes oder aus dieser heraus, sondern auch ein bestimmungsgemäßes Festlegen der Anschlussschraube und damit der Anschlagöse an dem Gegenstand vorgenommen werden kann, muss das Schraubwerkzeug eine hinreichende Stabilität aufweisen. Diesem wirkt in gewisser Weise das notwendige Vorsehen der aufweitbaren Einsetzöffnung im Bereich des Bügels entgegen. Mithin sind an das Schraubwerkzeug gewisse Anforderungen gestellt.

Eine weitere Anschlagöse gemäß dem Oberbegriff des Anspruchs 1 ist z.B. in WO 01/51401 A1 offenbart.

Ausgehend von diesem diskutierten Stand der Technik liegt der Erfindung daher die Aufgabe zugrunde, eine Anschlagöse der eingangs genannten Art dergestalt weiterzubilden, dass bei Bedarf, namentlich zum Ein- bzw. Ausschrauben der Anschlussschraube in bzw. aus einer Gewindebohrung eines Gegenstandes mit einfacheren Mitteln und daher auch auf kostengünstigere Art und Weise möglich ist.

Gelöst wird diese Aufgabe erfindungsgemäß durch eine eingangs genannte, gattungsgemäße Anschlagöse, bei der die Mittel zum Übertragen eines Drehmomentes von dem Ösenteil auf die Anschlussschraube zumindest eine in radialer Richtung nach außen weisende erste Drehmitnahmefläche an dem Kopf der Anschlussschraube und zumindest eine an dem Ösenteil zu der radialen Außenseite des Kopfes mit der ersten Drehmitnahmefläche der Anschlussschraube weisende und mit radialem Abstand zu dieser ersten Drehmitnahmefläche angeordnete zweite Drehmitnahmefläche umfassen, wobei die Mittel zum Übertragen eines Drehmomentes von dem Ösenteil auf die Anschlussschraube des Weiteren ein der Anschlagöse zugeordnetes Kupplungsstück zum Herstellen der Drehmitnahme zwischen dem Ösenteil und der Anschlussschraube umfassen, welches Kupplungsstück zum Einsetzen in den bei einer radialen Anordnung der beiden Drehmitnahmeflächen zueinander zwischen diesen befindlichen Kupplungsspalt ausgebildet ist, damit bei einem auf das Ösenteil wirkenden Drehmoment die Drehmitnahmefläche des Ösenteils auf das Kupplungsstück und dieses wiederum auf die Drehmitnahmefläche der Anschlussschraube wirkt.

Bei dieser Anschlagöse verfügt der Kopf der Anschlussschraube außenseitig über zumindest eine erste Drehmitnahmefläche. Des Weiteren verfügt das Ösenteil in einem zu der Außenseite des Kopfes der Anschlussschraube weisenden Abschnitt über eine zweite Drehmitnahmefläche. Die beiden Drehmitnahmeflächen sind zur Gewährleistung einer Drehbarkeit des Ösenteils gegenüber dem Kopf der Anschlussschraube voneinander in radialer Richtung beabstandet. Beide Drehmitnahmeflächen können aufgrund der Drehbarkeit des Ösenteils gegenüber dem Schraubenkopf in eine radiale Anordnung zueinander gebracht werden. Zwischen beiden Drehmitnahmeflächen befindet sich dann ein Spalt, der auch als Kupplungsspalt angesprochen werden kann. Um die Anschlussschraube drehmomentschlüssig an das Ösenteil anzuschließen ist es allein erforderlich, in den Kupplungsspalt ein Kupplungsstück einzusetzen, durch welches die freie Drehbarkeit zwischen Ösenteil und Anschlussschraube blockiert ist. Als Kupplungsstück eignet sich letztendlich jedweder Gegenstand, der dieser Anforderung Genüge tut, mithin dessen Materialstärke auf der einen Seite so bemessen ist, dass er in den Kupplungsspalt einpasst, und auf der anderen Seite eine Materialstärke aufweist, damit bei Ausüben einer Drehbewegung die beiden Drehmitnahmeflächen an dem Kupplungsstück anliegend und somit eine Drehmomentübertragung von dem Ösenteil auf die Anschlussschraube erfolgen kann. Als Kupplungsstück kann, sollte dieser der Anschlagöse nicht als solches zugeordnet sein, beispielsweise der Schaft oder die Spitze eines Schraubendrehers dienen.

Bei diesem Konzept erfolgt die drehmomentschlüssige Verbindung mittels des Kupplungsstückes durch Bereitstellen einer außenseitig tangential zur Drehachse der Anschlussschraube angeordnete Drehmitnahmefläche und einem durch die Innenseite des ohnehin vorhandenen Ösenteils bereitgestellten Widerlager, wobei dieses diejenige Fläche ist, mit der das Drehmoment von dem Ösenteil auf den Kopf der Anschlussschraube übertragen wird. Infolgedessen braucht das Kupplungsstück selbst keine Eigenstabilität nach Art eines Werkzeugschlüssels oder dergleichen aufzuweisen. Vielmehr wird das Kupplungsstück bei diesem Konzept aufgrund der Anordnung der Drehmitnahmeflächen quasi ausschließlich auf Druck belastet. Daher kann ein der Anschlagöse unmittelbar zugeordnetes Kupplungsstück in einfacher Weise, beispielsweise unter Verwendung eines Seiles oder dergleichen an das Ösenteil angeschlossen werden, wobei diese Verbindung allein dem Zweck dient, das Kupplungsstück unverlierbar an dem Ösenteil zu belassen. Eine drehmomentübertragende Funktion kommt einer solchen Schlaufe nicht zu.

Ausgenutzt wird bei diesem Konzept, dass zumindest eine Drehmitnahmefläche an der Innenseite des Ösenbügels angeordnet ist, mithin an einer Stelle, die bereits aufgrund der Ausbildung als Anschlagöse eine besondere Stabilität aufweist. Mithin wird dieses bei diesem Konzept in geschickter Weise genutzt, um das Kupplungsstück entsprechend einfach ausbilden zu können.

Zum Zwecke einer Drehmitnahme ist der Anschlagöse ein solches Kupplungsstück zugeordnet. Bei diesem handelt es sich in einer einfachen Ausgestaltung um ein leistenförmiges Blechstück.

Um eine Drehmomentkopplung zwischen Ösenteil und Anschlussschraube in mehreren Stellen der beiden Teile zueinander zu ermöglichen, ist gemäß einem Ausführungsbeispiel vorgesehen, dass das Ösenteil an den beiden zueinander weisenden Innenseiten jeweils über eine Drehmitnahmefläche verfügt. Ergänzend oder auch alternativ ist es möglich, dass der Schraubenkopf mehr als eine Drehmitnahmefläche an seiner Außenseite aufweist. Beispielsweise kann dieser zwei, typischerweise einander diametral gegenüberliegende Drehmitnahmeflächen aufweisen. Ebenso ist es möglich, dass der Kopf als Vierkantkopf oder als Sechskantkopf ausgebildet ist. Bei einer solchen Ausgestaltung kann auf Standardschrauben als Anschlussschrauben zurückgegriffen werden.

Die Drehmitnahmeflächen sind typischerweise gerade ausgeführt, können jedoch auch gekrümmt sein. Die Flächen des Kupplungsstückes, die an den Drehmitnahmeflächen zur Anlage gelangen, sind vorzugsweise komplementär zur Ausgestaltung der Drehmitnahmeflächen ausgeführt.

Um eine zweiseitige Drehmomenteinleitung in den Kopf der Anschlussschraube zu erzielen, sind zum Einen die beiden zueinander weisenden Innenseiten des Ösenteils bzw. des Ösenbogens mit einer Drehmitnahmefläche ausgerüstet. Zum Anderen verfügt der Kopf der Anschlussschraube über zwei einander diametral gegenüberliegende Drehmitnahmeflächen. Bei einer solchen Ausgestaltung wird man bevorzugt ein einziges Kupplungsstück einsetzen, welches nach Art einer Spange ausgeführt ist. Dabei bilden die Schenkel die eigentlichen Kupplungsstücke, von denen jedes in einen zwischen zwei einander zugeordneten Drehmitnahmeflächen befindlichen Kupplungsspalt eingesetzt wird. Das Kupplungsstück kann ebenfalls auch im Übrigen an die Außenkontur des Kopfes der Anschlussschraube angepasst sein und ist sodann ringförmig konzipiert. Handelt es sich bei dem Kopf der Sechskantschraube beispielsweise um einen Sechskantkopf kann das Kupplungsstück als Sechskant ausgeführt sein.

Das vorbeschriebene Konzept einer Anschlussöse eignet sich sowohl für solche Anschlussösen, bei denen das Ösenteil unter Zwischenschaltung eines Kugel- oder Wälzlagers an die Anschlussschraube angeschlossen ist, als auch für solche Ausgestaltungen, bei denen die Drehbarkeit zwischen diesen beiden Teilen allein aufgrund eines Gleitlagers erfolgt. Im letzteren Fall kann vorgesehen sein, dass die Anschlussschraube unmittelbar in einer Öffnung des Ösenteils gelagert ist oder auch unter Zwischenschaltung einer Lagerbuchse.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: eine zum Teil geschnittene Seitenansicht einer Anschlagöse mit einem der Anschlagöse zugeordneten Kupplungsstück,
- **Fig. 1a**:: eine Stirnseitenansicht des Kupplungsstückes der Figur 1,
- **Fig. 2:**: einen Horizontalschnitt durch die Anschlagöse der Figur 1 entlang der Schnittlinie A-B der Figur 1 und
- **Fig. 3:**: die Darstellung der Anschlagöse gemäß Figur 2, wobei die Anschlussschraube der Anschlagöse durch das Kupplungsstück drehmomentschlüssig an das Ösenteil gekoppelt ist.

Eine Anschlagöse 1 umfasst eine Anschlussschraube 2 und ein Ösenteil 3. Das Ösenteil 3 ist um die Längsachse der Anschlussschraube 2 gegenüber dieser drehbar. Das Ösenteil 3 der Anschlussschraube 1 verfügt über einen ringförmigen Grundkörper 4 mit einer zentralen Durchbrechung als Öffnung, in die eine Lagerbuchse 5 eingesetzt ist. Innerhalb der Lagerbuchse 5 befindet sich der Schaft 6 der Anschlussschraube 2. Zum Halten der Lagerbuchse 5 ist innerhalb der Durchbrechung des Grundkörpers 4 ein nach innen vorspringender umlaufender Lagerflansch 7 am Grundkörper 4 vorgesehen. An diesem ist die Lagerbuchse 5 festgesetzt. Die Lagerbuchse 5 des dargestellten Ausführungsbeispiels besteht aus zwei Lagerbuchsenteilen 8, 8.1. Jedes der beiden Lagerbuchsenteile 8, 8.1 verfügt über einen in radialer Richtung nach außen abragenden Schenkel. Diese übergreifen den Lagerflansch 7 des Grundkörpers 4. Die beiden Lagerbuchsenteile 8, 8.1 sind in nicht näher dargestellter Art und Weise in Längserstreckung der Öffnung miteinander verbunden, beispielsweise an den in dieser Richtung überlappenden Abschnitten miteinander verschraubt.

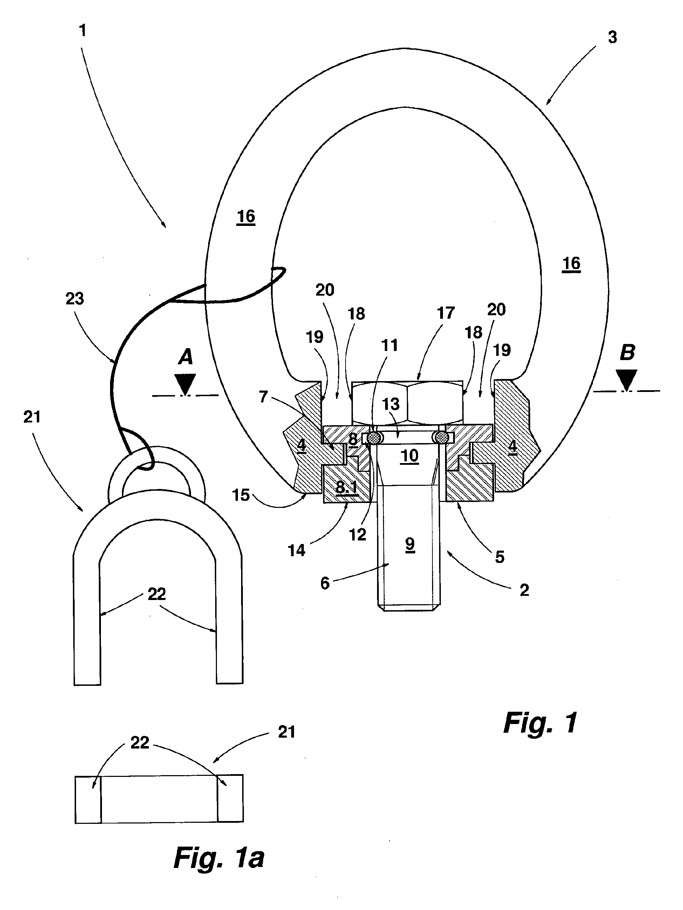

Der Schaft 6 der Anschlussschraube 2 verfügt über einen Gewindeabschnitt 9 und einen sich daran anschließenden gewindefreien Abschnitt 10. Gehalten ist die Anschlussschraube 2 innerhalb der Lagerbuchse 5 durch einen Sprengring 11, der in eine umlaufende Nut 12 des gewindefreien Abschnittes 10 der Anschlussschraube 2 und in eine umlaufende Nut 13 des Lagerbuchsenteils 8 eingreift. Die in Figur 1 erkennbare Unterseite 14 des Lagerbuchsenteils 8.1 bildet die Anlagefläche, die an der Oberfläche eines Gegenstandes zur Anlage kommt, an die die Anschlagöse 1 angeschlossen wird. Die Unterseite 14 des Lagerbuchsenteils 8.1 steht somit über dem unteren Abschluss 15 des Grundkörpers 4 hervor.

Angeformt an den Grundkörper 4 des Ösenteils 3 ist ein Ösenbügel 16. Die eigentliche Öse wird somit durch den Ösenbügel 16 und den Grundkörper 4 ausgebildet.

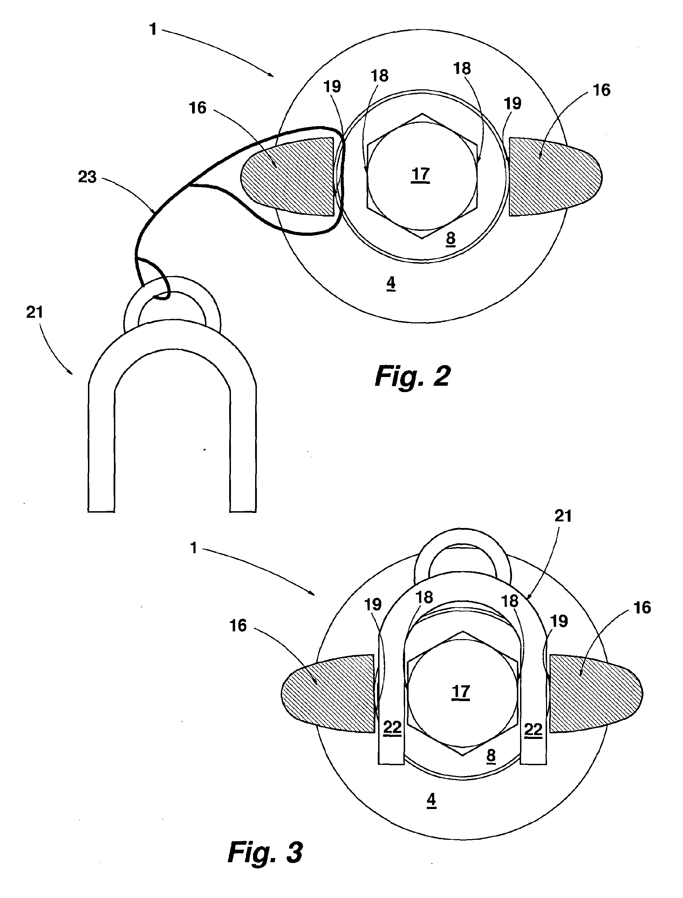

Neben dem Schaft 6 verfügt die Anschlussschraube 2 über einen den Schaft 6 überkragenden Kopf 17. Dieser ist bei dem dargestellten Ausführungsbeispiel als Sechskantkopf ausgebildet. Dabei bilden die nach außen weisenden geraden Flächen des Kopfes 17 Drehmitnahmeflächen, über die ein Drehmoment in die Anschlussschraube 2 zum Einschrauben derselben in eine Gewindebohrung und auch zum Herausschrauben derselben aus einer solchen eingeleitet wird. Figur 1 zeigt den Kopf 17 in einer Orientierung, in der zwei Drehmitnahmeflächen parallel zur Innenseite der an den Grundkörper 4 grenzenden Abschnitte des Ösenbügels 16 verlaufen (s. auch Figur 2). Diese Drehmitnahmeflächen sind in Figur 1 mit dem Bezugszeichen 18 kenntlich gemacht. Der Ösenbügel 16 verfügt in seinem jeweils an den Grundkörper 4 grenzenden Abschnitten ebenfalls über jeweils eine Drehmitnahmefläche 19. Diese sind ebenso wie die Drehmitnahmeflächen 18 des Kopfes 17 gerade ausgeführt. Zwischen jeweils zwei Drehmitnahmeflächen 18, 19 befindet sich ein Kupplungsspalt 20. Die Weite des Kupplungsspaltes 20 ist so bemessen, dass der Abstand der Drehmitnahmeflächen 19 voneinander größer ist als der größte Durchmesser des Kopfes 17 der Anschlussschraube 2. Mithin ist das Ösenteil 3 gegenüber der Anschlussschraube 2 grundsätzlich frei drehbar.

Zum Ein- und Ausschrauben der Anschlussschraube 2 dient ein Kupplungsstück 21. Das Kupplungsstück 21 ist bei dem in den Figuren dargestellten Ausführungsbeispiel nach Art einer Spange ausgeführt. Die beiden Schenkel 22 dienen zum Eingreifen in jeweils einen Kupplungsspalt 20 und weisen eine Materialstärke auf, die geringfügig kleiner als die lichte Weite des Kupplungsspaltes 20 ist, und zwar dann, wenn die einen solchen Spalt 20 einfassenden Drehmitnahmeflächen 18, 19 parallel zueinander angeordnet sind.

Eine solche Anordnung der Drehmitnahmeflächen 18, 19 zueinander ist aus der Figur 2 erkennbar. In Figur 2 ist der Kopf 17 in einer Draufsicht gezeigt. Deutlich erkennbar ist aus dieser Darstellung, dass in dem unteren, an den Grundkörper 4 grenzenden Bereich der Ösenbügel 16 an seinen zueinander weisenden Seiten in einem Abschnitt gerade ausgeführt ist. Dieses sind die Drehmitnahmeflächen 19. Wird das Kupplungsstück 21 mit seinen beiden Schenkeln 22 in die Kupplungsspalte 20 eingeführt, wie dieses in Figur 3 gezeigt ist, ist die Anschlussschraube 2 drehmomentschlüssig an das Ösenteil 3 angeschlossen. Mithin kann dann unter Ausnutzung des durch die Ausbauchung des Ösenbügels 16 gebildeten Hebels die Anschlussschraube 2 an einem Gegenstand festgelegt werden. Zu diesem Zweck wird der Gewindeabschnitt 9 bzw. ein Teil desselben in eine komplementäre Gewindebohrung des Gegenstandes eingeschraubt. Es versteht sich, dass jede der einander diametral gegenüberliegenden außenseitigen Kopfflächen der Anschlussschraube 2 als Drehmitnahmeflächen dienen können.

Das Kupplungsstück 21 ist unter Verwendung eines Drahtseiles 23 unverlierbar an die Anschlagöse 1 angeschlossen.

### Bezugszeichenliste

- 1: Anschlagöse
- 2: Anschlussschraube
- 3: Ösenteil
- 4: Grundkörper
- 5: Lagerbuchse
- 6: Schaft
- 7: Lagerflansch
- 8, 8.1: Lagerbuchsenteil
- 9: Gewindeabschnitt
- 10: Gewindefreier Abschnitt
- 11: Sprengring
- 12: Nut
- 13: Nut
- 14: Unterseite
- 15: Unterer Abschluss
- 16: Ösenbügel
- 17: Kopf
- 18: Drehmitnahmefläche
- 19: Drehmitnahmefläche
- 20: Kupplungsspalt
- 21: Kupplungsstück
- 22: Schenkel
- 23: Drahtseil

## Patentansprüche

1. Anschlagöse mit einer Anschlussschraube (2) zum Festlegen der Anschlagöse (1) an einem Gegenstand, welche Anschlussschraube (2) über einen Schaft (6) mit einem Gewindeabschnitt (9) und einen an den Schaft (6) angeformten Kopf (17) verfügt, mit einem um die Längsachse des Schaftes (6) der Anschlussschraube (2) drehbaren Ösenteil (3) sowie mit Mitteln zum bedarfsweisen Übertragen einer Drehbewegung des Ösenteils (3) auf die Anschlussschraube (2), **dadurch gekennzeichnet, dass** die Mittel zum Übertragen eines Drehmomentes von dem Ösenteil (3) auf die Anschlussschraube (2) zumindest eine in radialer Richtung nach außen weisende erste Drehmitnahmefläche (18) an dem Kopf (17) der Anschlussschraube (2) und zumindest eine an dem Ösenteil (3) zu der radialen Außenseite des Kopfes (17) mit der ersten Drehmitnahmefläche (18) der Anschlussschraube (2) weisende und mit radialem Abstand zu dieser ersten Drehmitnahmefläche (18) angeordnete zweite Drehmitnahmefläche (19) umfassen, wobei die Mittel zum Übertragen eines Drehmomentes von dem Ösenteil (3) auf die Anschlussschraube (2) des Weiteren ein der Anschlagöse (1) zugeordnetes Kupplungsstück (21) zum Herstellen der Drehmitnahme zwischen dem Ösenteil (3) und der Anschlussschraube (2) umfassen, welches Kupplungsstück (21) zum Einsetzen in den bei einer radialen Anordnung der beiden Drehmitnahmeflächen (18, 19) zueinander zwischen diesen befindlichen Kupplungsspalt (20) ausgebildet ist, damit bei einem auf das Ösenteil (3) wirkenden Drehmoment die Drehmitnahmefläche (19) des Ösenteils (3) auf das Kupplungsstück (21) und dieses wiederum auf die Drehmitnahmefläche (18) der Anschlussschraube (2) wirkt.

2. Anschlagöse nach Anspruch 1, **dadurch gekennzeichnet, dass** die Drehmitnahmeflächen (18, 19) als gerade Flächen ausgeführt sind.

3. Anschlagöse nach Anspruch 1 oder 2, **dadurch gekennzeichnet, dass** an der Außenseite der Anschlussschraube (2) mehrere Drehmitnahmeflächen (18, 19) angeordnet sind.

4. Anschlagöse nach Anspruch 3, **dadurch gekennzeichnet, dass** der Kopf (17) der Anschlussschraube (2) als Sechskantkopf ausgebildet ist.

5. Anschlagöse nach einem der Ansprüche 1 bis 4, **dadurch gekennzeichnet, dass** das Ösenteil (3) über zwei einander diametral zu der Drehachse des Ösenteils (3) gegenüberliegende Drehmitnahmeflächen (18, 19) verfügt.

6. Anschlagöse nach einem der Ansprüche 1 bis 5, **dadurch gekennzeichnet, dass** das Kupplungsstück (21) eine zu jeder daran zur Anlage gelangenden Drehmitnahmefläche (18, 19) komplementäre Kupplungsfläche verfügt.

7. Anschlagöse nach Anspruch 6, **dadurch gekennzeichnet, dass** das Kupplungsstück (21) nach Art einer Spange ausgebildet ist.

8. Anschlagöse nach Anspruch 6, **dadurch gekennzeichnet, dass** das Kupplungsstück (21), an die radial nach außen weisende Umfangskontur des Kopfes (17) mit seiner zumindest einen Drehmitnahmefläche (18, 19) angepasst, ringförmig als offener oder geschlossener Ring ausgeführt ist.

9. Anschlagöse nach einem der Ansprüche 1 bis 8, **dadurch gekennzeichnet, dass** das Ösenteil (3) einen ringförmigen Grundkörper (4), dessen Öffnung von dem Schaft (6) der Anschlussschraube (2) durchgriffen ist, und einen an den Grundkörper (4) angeformten Ösenbügel (16) umfasst, wobei die zumindest eine Drehmitnahmefläche (19) des Ösenteils (3) an der Innenseite des Ösenbügels (16) in dem an den Grundkörper (4) angrenzenden Ösenbügelabschnitt angeordnet ist.

10. Anschlagöse nach einem der Ansprüche 1 bis 9, **dadurch gekennzeichnet, dass** innerhalb der Öffnung des Grundkörpers (4) des Ösenteils (3) ein nach innen vorspringender, umlaufender Lagerflansch (7) vorgesehen ist, an den eine den Schaft (6) der Anschlussschraube (2) umfassende Lagerbuchse (5) in Längserstreckung der Ringöffnung formschlüssig angeschlossen ist.

11. Anschlagöse nach Anspruch 10, **dadurch gekennzeichnet, dass** die Lagerbuchse (5) aus zwei Buchsenteilen (8, 8.1) zusammengesetzt ist.

12. Anschlagöse nach Anspruch 10 oder 11, **dadurch gekennzeichnet, dass** der Grundkörper (4) des Ösenteils (3) gegenüber der Lagerbuchse (5) und/oder die Lagerbuchse (5) gegenüber dem diese durchgreifenden Schaftabschnitt der Anschlussschraube (2) drehbar ist.

## Claims

1. Anchorage point with a connection screw (2) for securing the anchorage point (1) to an object, said connection screw (2) being provided with a shaft (6) with a threaded section (9) and a head (17) formed on the shaft (6), with an eye part (3) rotatable about the longitudinal axis of the shaft (6) of the connection screw (2) and with means for the transfer as necessary of a rotational movement of the eye part (3) onto the connection screw (2), **characterised in that** the means for transferring a torque moment from the eye part (3) onto the connection screw (2) comprise at least one first rotational carrier face (18) facing outwards in a radial direction at the head (17) of the connection screw (2), and at least one second rotational carrier face (19) arranged at the eye part (3), facing the radial outer side of the head (17) with the first rotational carrier face (18) of the connection screw (2) and arranged at a distance from this first rotational carrier face (18), wherein the means for transferring a torque moment from the eye part (3) onto the connection screw (2) further comprise a coupling piece (21) associated with the anchorage point (1) for creating the rotational movement in sympathy between the eye part (3) and the connection screw (2), said coupling piece (21) being formed for insertion into the coupling gap (20) which is formed between the two rotational carrier faces (18, 19) when in a radial arrangement, such that, when a torque moment takes effect on the eye part (3), the rotational carrier face (19) of the eye part (3) takes effect on the coupling piece (21), and this in turn takes effect on the rotational carrier face (18) of the connection screw (2).

2. Anchorage point according to claim 1, **characterised in that** the rotational carrier faces (18, 19) are designed as flat surfaces.

3. Anchorage point according to claim 1 or 2, **characterised in that** a plurality of rotational carrier faces (18, 19) are arranged on the outside of the connection screw (2).

4. Anchorage point according to claim 3, **characterised in that** the head (17) of the connection screw (2) is formed as a hexagonal head.

5. Anchorage point according to any one of claims 1 to 4, **characterised in that** the eye part (3) is provided with two rotational carrier faces (18, 19) diametrically opposite to one another in relation to the axis of rotation of the eye part (3).

6. Anchorage point according to any one of claims 1 to 5, **characterised in that** the coupling piece (21) comprises a coupling surface which is complementary to each rotational carrier face (18, 19) which comes in contact with it.

7. Anchorage point according to claim 6, **characterised in that** the coupling piece (21) is formed in the manner of a buckle.

8. Anchorage point according to claim 6, **characterised in that** the coupling piece (21) being matched with its at least one rotational carrier face (18, 19) to the circumferential contour of the head (17) facing radially outwards, is designed in ring fashion as an open or closed ring.

9. Anchorage point according to any one of claims 1 to 8, **characterised in that** the eye part (3) comprises a ring-shaped base body (4), of which the opening is penetrated by the shaft (6) of the connection screw (2), and an eye bar (16) formed on the base body (4), wherein the at least one rotational carrier face (19) of the eye part (3) is arranged on the inner side of the eye bar (16) in the eye bar section delimited at the base body (4).

10. Anchorage point according to any one of claims 1 to 9, **characterised in that**, inside the opening of the base body (4) of the eye part (3), a circumferential bearing flange (7) is arranged, projecting inwards, connected to which in the longitudinal extension of the ring opening, in positive fit, is a bearing bushing (5) encompassing the shaft (6) of the connection screw (2).

11. Anchorage point according to claim 10, **characterised in that** the bearing bushing (5) is composed of two bushing parts (8, 8.1).

12. Anchorage point according to claim 10 or 11, **characterised in that** the base body (4) of the eye part (3) is rotatable in relation to the bearing bushing (5), and/or the bearing bushing (5) in relation to the shaft section of the connection screw (2) which penetrates it.

## Revendications

1. Anneau d'arrimage comprenant une vis d'assemblage (2) afin de fixer l'anneau d'arrimage (1) à un objet, laquelle vis d'assemblage (2) dispose d'un fût (6) comportant un tronçon fileté (9) et une tête (17) moulée sur le fût (6), comportant une partie d'anneau (3) rotative autour de l'axe longitudinal du fût (6) de la vis d'assemblage (2) et comportant des moyens pour transmettre selon les besoins un mouvement de rotation de la partie d'anneau (3) sur la vis d'assemblage (2), **caractérisé en ce que** les moyens pour transmettre un moment de rotation d'un couple de forces depuis la partie d'anneau (3) sur la vis d'assemblage (2) comprennent au moins une première surface d'entraînement en rotation (18), orientée vers l'extérieur dans le sens radial, sur la tête (17) de la vis d'assemblage (2) et au moins une seconde surface d'entraînement en rotation (19) située sur la partie d'anneau (3), orientée par sa première surface d'entraînement en rotation (18) de la vis d'assemblage (2) vers la face externe radiale de la tête (17) et disposée avec un écart radial par rapport à cette première surface d'entraînement en rotation (18), les moyens pour transmettre un moment d'entraînement d'un couple de force depuis la partie d'anneau (3) sur la vis d'assemblage (2) comprenant par ailleurs une pièce de couplage (21) affectée à l'anneau d'arrimage (1) afin de réaliser un entraînement en rotation entre la partie d'anneau (3) et la vis d'assemblage (2), laquelle pièce de couplage (21) est conformée, quand les deux surfaces d'entraînement en rotation (18, 19) sont disposées radialement l'une par rapport à l'autre, pour être placée dans une fente de couplage (20) se trouvant entre ces dernières, afin qu'en présence d'un moment de rotation d'un couple de forces agissant sur la partie d'anneau (3), la surface d'entraînement en rotation (19) de la partie d'anneau (3) agisse sur la pièce de couplage (21) et celle-ci, à son tour, sur la surface d'entraînement en rotation (18) de la vis d'assemblage (2).

2. Anneau d'arrimage selon la revendication 1, **caractérisé en ce que** les surfaces d'entraînement en rotation (18, 19) sont réalisées en tant que surfaces droites.

3. Anneau d'arrimage selon la revendication 1 ou 2, **caractérisé en ce que** plusieurs surfaces d'entraînement en rotation (18, 19) sont disposées sur la face externe de la vis d'assemblage (2).

4. Anneau d'arrimage selon la revendication 3, **caractérisé en ce que** la tête (17) de la vis d'assemblage (2) est conformée en tête hexagonale.

5. Anneau d'arrimage selon l'une des revendications 1 à 4, **caractérisé en ce que** la partie d'anneau (3) dispose de deux surfaces d'entraînement en rotation (18, 19) en opposition diamétrale par rapport à l'axe de rotation de la partie d'anneau (3).

6. Anneau d'arrimage selon l'une des revendications 1 à 5, **caractérisé en ce que** la pièce de couplage (21) dispose d'une surface de couplage complémentaire à chaque surface d'entraînement en rotation (18, 19) qui vient se mettre en appui sur elle.

7. Anneau d'arrimage selon la revendication 6, **caractérisé en ce que** la pièce de couplage (21) est conformée en une sorte d'agrafe.

8. Anneau d'arrimage selon la revendication 6, **caractérisé en ce que** la pièce de couplage (21) est réalisée sous forme de bague, en tant que bague ouverte ou fermée, pour s'adapter par au moins une de ses surfaces d'entraînement en rotation (18, 19) au contour circonférentiel de la tête (17) orienté radialement vers l'extérieur.

9. Anneau d'arrimage selon l'une des revendications 1 à 8, **caractérisé en ce que** la partie d'anneau (3) comprend un corps de base (4) de forme annulaire dont l'ouverture est traversée par le fût (6) de la vis d'assemblage (2) et un étrier d'anneau (16) moulé sur le corps de base (4), l'au moins une surface d'entraînement en rotation (19) de la partie d'anneau (3) étant disposée sur la face interne de l'étrier d'anneau (16) dans le tronçon d'étrier d'anneau contigu au corps de base (4).

10. Anneau d'arrimage selon l'une des revendications 1 à 9, **caractérisé en ce qu'**il est prévu dans l'ouverture du corps de base (4) de la partie d'anneau (3) une bride d'appui (7) circulaire, en saillie vers l'intérieur, sur laquelle est assemblé par complémentarité de forme, dans le sens de l'étendue longitudinale de l'ouverture circulaire, un coussinet (5) englobant le fût (6) de la vis d'assemblage (2).

11. Anneau d'arrimage selon la revendication 10, **caractérisé en ce que** le coussinet (5) est composé de deux parties de coussinet (8, 8.1).

12. Anneau d'arrimage selon la revendication 10 ou 11, **caractérisé en ce que** le corps de base (4) de la partie d'anneau (3) est rotatif par rapport au coussinet (5) et/ou le coussinet (5) est rotatif par rapport au tronçon de fût de la vis d'assemblage (2) qui le traverse.
